# EUROPÄISCHE PATENTANMELDUNG

(11) **EP 0 969 702 A2**
(43) Veröffentlichungstag der Anmeldung: **05.01.2000**
(21) Anmeldenummer: 99112235.9
(22) Anmeldetag: 25.06.1999
(51) Int. Cl.: H05B 37/02

(54) **Steuereinrichtung für Beleuchtungssystem**

(30) Priorität: 30.06.1998 DE 29811633 U
(71) Anmelder: TRILUX-LENZE GmbH & Co. KG, D-59759 Arnsberg (DE); Leax Limited, London EC 4 CE (GB)
(72) Erfinder: Hasemann, Fred Dr. Ing., 59759 Arnsberg (DE); Nattkemper, Guido Dipl.-Physiker, 59425 Unna (DE)
(74) Vertreter: Stachow, Ernst-Walther, Prof. Dr.

(57) **Zusammenfassung**

Ein Beleuchtungssystem weist mindestens eine Leuchteinheit (1) auf, die über eine wenigstens mit einem Helligkeitssensor (8) ausgestattete Steuereinrichtung (4) anhand von Parametern steuerbar und/oder regelbar ist. Um bei einer Vielzahl von unterschiedlichen Parametern ein einfaches Einstellen der Steuereinrichtung und gleichzeitig eine einfache Herstellung zu gewährleisten, sind die Parameter über einen an der Steuereinrichtung (4) angeordneten Sensortaster (5) einstellbar und ist an der Steuereinrichtung (4) eine Zustandsanzeige (5) vorgesehen, die den einzustellenden Parameter anzeigt.

## Beschreibung

Die Erfindung betrifft ein Beleuchtungssystem mit mindestens einer Leuchteinheit, die über eine wenigstens mit einem Helligkeitssensor ausgestattete Steuereinrichtung anhand von Parametern steuerbar und/oder regelbar ist.

Beleuchtungssysteme mit einer Steuereinrichtung für eine flexible und den Bedürfnissen der Benutzer angepaßtes Ausleuchten eines Raumes oder eines Arbeitsplatzes sind hinlänglich bekannt. Für die Steuerung der abgegebenen Helligkeit weist eine solche Steuereinrichtung eine Reihe von Parametern auf, mit denen eine Steuerung oder eine Regelung der Helligkeit erfolgt. Eine Helligkeitsregelung liegt beispielsweise vor, wenn die Helligkeit der Leuchteinheit abhängig von der gemessenen Helligkeit einschließlich der durch die Leuchteinheit erzeugten Helligkeit erfolgt. Im Stand der Technik ist eine Reihe von Steuer- und Regelfunktionen für Beleuchtungssysteme bekannt.

Nachteilig an den bekannten Beleuchtungssystemen mit Steuereinrichtung ist es, daß ein Einstellen der Parameterwerte sehr aufwendig ist und den Gebrauch des Beleuchtungssystems erschwert. Beispielsweise ist es bei herkömmlichen Beleuchtungssystemen bekannt, Parameterwerte der Steuereinrichtung für das Beleuchtungssystem durch Drehen eines Potentiometerknopfs oder durch Umlegen von Schaltern einzustellen. Dies ist jedoch insbesondere nachteilig, wenn mehrere Parameterwerte an der Steuereinrichtung durch den Benutzer eingestellt werden können.

Von diesem Stand der Technik ausgehend liegt der Erfindung die Aufgabe zugrunde, ein Beleuchtungssystem mit einer Steuereinrichtung zu schaffen, daß auch bei einer Vielzahl von unterschiedlichen Parametern ein einfaches Einstellen dieser erlaubt und gleichzeitig einfach in der Herstellung ist.

Der Erfindung nach sind die Parameter über einen an der Steuereinrichtung angeordneten Sensortaster einstellbar und erfindungsgemäß ist an der Steuereinheit eine Zustandsanzeige vorgesehen, die den einzustellenden Parameter anzeigt. Als ein Sensortaster kann hier jeder durch Druck betätigbare Taster Verwendung finden. Der Sensortaster ist für eine Person von Außen zugänglich in der Steuereinrichtung angeordnet und wird durch einfaches Eindrücken betätigt. Die Zustandsanzeige zeigt dem Benutzer während des Einstellvorgangs an, in welchem Modus des Einstellens die Steuereinrichtung sich gerade befindet und welcher Parameter durch den Sensortaster einstellbar ist. Vorteilhaft an der Verwendung eines Sensortasters ist es, daß er ein einfaches und überschaubares Einstellen der Parameter zuläßt. Ferner ist an dem Zusammenwirken von Sensortaster und Zustandsanzeige vorteilhaft, daß der Benutzer mit dem einfachen Betätigungselement eines Sensortasters durch eine Rückmeldung über die Zustandsanzeige eine Vielzahl von Parametern übersichtlich an der Steuereinheit einstellen kann. Das erfindungsgemäße Zusammenwirken der beiden Elemente der Steuereinheit, nämlich dem Sensortaster und der Zustandsanzeige, ermöglicht es, auch aufwendige Parametereinstellungen an einem Beleuchtungssystem in einfacher Form und mit einfachen Mitteln vorzunehmen.

In einer besonders übersichtlichen Ausbildung enthält die Zustandsanzeige eine Leuchtdiode. Die Leuchtdiode kann als einfaches Bauelement in die Steuereinrichtung mit der Zustandsanzeige integriert werden. Auch ermöglicht eine Leuchtdiode in der Zustandsanzeige, daß diese nicht weiter im Gesamtbild des Beleuchtungssystems auffällt und in verschiedene Typen von Beleuchtungssystemen ohne großen Aufwand integriert werden kann. Ferner ist eine Leuchtdiode ein für den Benutzer einfach zu verstehendes Element, mit dem Unklarheiten und Schwierigkeiten beim Ablesen vermieden werden.

In einer besonders einfach handhabbaren Weiterführung enthält die Steuereinrichtung eine Blinkschaltung, die durch Aufblinken der Leuchtdiode den zum Einstellen ausgewählten Parameter anzeigt. Die in der Steuereinrichtung einstellbaren Parameter werden durchnumeriert. Hierbei können die für gewöhnlich häufiger durch den Benutzer einzustellenden Parameter mit einer niedrigeren Nummer versehen werden. Durch die Anzahl des Aufblinkens wird dem Benutzer mitgeteilt, welcher Parameter durch Betätigen des Sensortasters ausgewählt wurde. Hierzu ist muß der Benutzer lediglich mitzählen, wie häufig die Zustandsanzeige aufblinkt.

Fehlbedienungen der Steuereinrichtung werden vermieden, indem die Steuereinrichtung durch eine kontinuierliche Betätigung des Sensortasters über eine vorbestimmte Zeitspanne hinweg in einen Programmiermodus, in welchem die Parameter einstellbar sind, umschaltbar ist. Indem der Programmiermodus nur durch ein anhaltendes Drücken des Sensortasters aktivierbar ist, ist die Steuereinrichtung gegen unbeabsichtigte Fehlbedienungen geschützt. Als eine Zeitspanne, die sich in der Praxis bewährt hat, können hier 5 Sekunden vorgesehen werden.

Ein einfache Auswahl des einzustellenden Parameters erfolgt dadurch, daß die Steuereinrichtung eine Erkennungsschaltung enthält, die im Programmiermodus aktiviert ist und durch eine Betätigungsfolge des Sensortasters den einzustellenden Parameter erkennt. Die Betätigungsfolge kann sehr verschieden aufgebaut sein, beispielsweise die Zeitdauer des Tastendrucks, die Abfolge von langen und kurzen Tastendrücken, die Anzahl der Tastendrücke in einer bestimmten Zeitspanne und andere Codierungen sind möglich. Hierbei hat es sich in der Praxis als zweckmäßig erwiesen, den einzustellenden Parameter durch die Anzahl der Drücke auf den Sensortaster auszuwählen. Ist der Programmiermodus nicht aktiviert, so kann ein versehentliches Drücken des Sensortasters keine Änderung der Parametereinstellung herbeiführen.

Ein weiterer Schutz vor versehentlicher Fehlbedienung wird erreicht, indem der Steuereinrichtung nach Ablauf einer Zeitspanne ohne Betätigung des Sensortasters den Programmiermodus beendet. Durch das selbständige Zurückschalten in den Regel- und Steuerbetrieb kann eine Fehlbedienung der Steuereinrichtung dadurch, daß diese sich bereits oder immer noch im Programmiermodus befindet, vermieden werden. Als praktikable Verzögerungszeit hat sich eine Zeitspanne von ungefähr 30 Sekunden erwiesen.

In einer vorteilhaften Weiterführung der Erfindung, ist die Steuereinrichtung durch eine Fernbedienung steuerbar und ferner ist in der Steuereinrichtung ein Adreßparameter zur Identifikation der zur Steuerung zulässigen Fernbedienung vorgesehen, wobei der Adreßparameter einen die Fernbedienung identifizierenden Adressencode enthält, der, wenn die Steuereinrichtung sich zur Einstellung des Adreßparameters im Programmiermodus befindet, durch mehrmaliges Betätigen der Fernbedienung in der Steuereinrichtung speicherbar ist. Beim Betätigen der Fernbedienung sendet diese ein Signal, das in Adreßteil und Befehlsteil unterschieden wird. Der Adreßteil enthält hierbei einen Abschnitt der den Sender identifiziert. Dieser Teil wird für ein zukünftiges Erkennen der zur Steuerung zugelassenen Fernbedienung in der Steuereinrichtung gespeichert. So wird eine einfache Einstellung der Zuordnung zwischen Fernbedienung und Steuereinrichtung ermöglicht, was für einen flexiblen Einsatz der Steuereinrichtung sehr vorteilhaft ist.

In einer zweckmäßigen und gut bedienbaren Ausführung der Erfindung ist in der Steuereinrichtung ein Sollwert als Parameter für einen tageslichtabhängigen Regelbetrieb vorgesehen, wobei dieser Sollwertparameter in einem zu seiner Einstellung vorgesehenen Modus, in dem die Steuereinrichtung die zugehörige Leuchteinheit von maximaler zu minimaler Helligkeit fährt, durch eine Betätigung des Sensortasters bei der gewünschten Helligkeit einstellbar ist. Insbesondere das Einstellen der Helligkeit für den tageslichtabhängigen Regelbetrieb ist eine für den Benutzer überaus wichtige Funktion. Seine Einstellung erfolgt über den Sensortaster in einer einfachen und für den Benutzer angenehmen Weise, indem ihm die Helligkeit angeboten wird und er lediglich durch Betätigen des Sensortasters die gewünschte Helligkeit auswählt und diese in der Steuereinrichtung gespeichert wird.

In einer zweckmäßigen Weiterführung hiervon ist in der Steuereinrichtung ein Parameter zur Aktivierung des tageslichtabhängigen Regelbetriebs vorgesehen. Beim tageslichtabhängigen Regelbetrieb wird die Helligkeit der Leuchteinheit abhängig von der durch den Helligkeitssensor gemessenen Helligkeit geregelt. Ist der tageslichtabhängige Regelbetrieb nicht aktiviert, so bleiben die eingestellten Helligkeitswerte gespeichert und stehen bei einer erneuten Aktivierung wieder zur Verfügung.

Bei einer vorteilhaften Ausführung der Erfindung ist in der Steuereinrichtung ein Parameter für einen minimalen Helligkeitswert vorgesehen, wobei dieser in einem zu seiner Einstellung vorgesehenen Modus, in dem die Steuereinrichtung die zugehörige Leuchteinheit von maximaler zu minimaler Helligkeit fährt, durch eine Betätigung des Sensortasters einstellbar ist. Mit dem Parameter der minimalen Helligkeit wird ein Helligkeitswert festgelegt, auf den die Steuereinrichtung zurückgefahren werden kann. Beispielsweise kann diese minimale Helligkeit in dem tageslichtabhängigen Regelbetrieb auch dazu dienen, anstatt die Beleuchtungseinrichtung bei ausreichend Tageslicht auszuschalten, die Beleuchtungseinrichtung auf diese minimale Helligkeit hinunterzudimmen, wodurch dann ein Ausschalten und ein etwaiges späteres Wiedereinschalten unterbleiben kann.

In einer besonders bevorzugten Weiterführung der Erfindung, enthält die Steuereinrichtung einen Anwesenheitsdetektor und/oder Bewegungssensor, wobei in der Steuereinrichtung ein Parameter zur Aktivierung einer durch den Anwesenheitsdetektor und/oder den Bewegungssensor ausgelösten Abschaltfunktion vorgesehen ist. Eine solche personenabhängige Abschaltfunktion ist als Möglichkeit zur Energieeinsparung sehr wichtig, jedoch kann eine solche Abschaltfunktion nicht immer eingesetzt werden, da Situationen auftreten können, in denen ein Abschalten des Lichts unerwünscht ist. Solche Situationen können beispielsweise auftreten, wenn auch ein leerer Raum beleuchtet bleiben soll, beispielsweise weil das Licht zur Orientierung dient oder weil der Raum häufig betreten wird und ein ständiges Ein- und Ausschalten der Leuchteinheiten störend und nachteilig wäre. Im Hinblick auf die Abschaltfunktion braucht nicht weiter zwischen einem Anwesenheitsdetektor, der aus einem Infrarotsensor, aus Lichtschranken in der Tür und einer Zähleinrichtung, um in dem Raum anwesende Personen festzustellen, oder dergleichen bestehen kann, und einem Bewegungssensor unterschieden werden. Durch das erfindungsgemäße einfache Einstellen des Parameters an der Steuereinrichtung wird dem Benutzer ermöglicht, diese Abschaltfunktion je nach Gegebenheit einzusetzen.

Auch kann bei einer Weiterführung der Erfindung in der Steuereinrichtung ein Parameter zur Aktivierung einer tageslichtabhängigen Einschaltfunktion der Leuchteinheit vorgesehen sein. Ist die tageslichtabhängige Einschaltfunktion deaktiviert, so schaltet sich die Beleuchtungseinrichtung bei nachlassendem Tageslicht nicht ein. Durch das Aktivieren und Deaktivieren dieser Funktion kann der Benutzer eines Raums die Beleuchtungseinrichtung an seine Bedürfnisse und Gewohnheiten anpassen. Auch ist bei einer Nutzungsänderung des Raums ein einfaches Umstellen der Beleuchtungseinrichtung für einen neuen Benutzer möglich.

Zweckmäßigerweise ist in der Steuereinrichtung ein Parameter für ein zurücksetzen sämtlicher Parameterwerte vorgesehen.

Wird der Parameter für das Zurücksetzen (Resetparameter) gesetzt, so werden alle Parameterwerte auf ihren Ausgangswert zurückgesetzt. Sind die Parameterwerte zurückgesetzt, so wird der Resetparameter anschließend ebenfalls wieder zurückgesetzt, damit ein nachfolgendes erneutes Zurücksetzen aller Parameterwerte möglich ist. Mit dem Resetparameter ist ein einfaches Zurücksetzen auf z.B. werkseitig eingestellte Parameterwerte möglich.

In einer vorteilhaften Ausführung der Erfindung ist der Sensortaster hinter einer Öffnung in einer Gehäusewand der Steuereinrichtung angeordnet. Bevorzugt ist die Öffnung in der Gehäusewand so klein, daß der Sensortaster nur mit einem durch die Öffnung geführten länglichen Gegenstand betätigbar ist. Hierdurch ist ein Betätigen des Sensortasters und die damit verbundene Möglichkeit eines Verstellens oder Löschens der Parameterwerte nur möglich, wenn gezielt ein länglicher Gegenstand, wie beispielsweise ein Stift, eingesetzt wird.

Die Zeichnungen veranschaulichen ein besonders vorteilhaftes Ausführungsbeispiel der Erfindung. Es zeigt:
Fig. 1 ein Beleuchtungssystem mit einer Leuchtstofflampe und einer Steuereinrichtung und
Fig. 2 eine Steuereinrichtung mit Sensortaster, Zustandsanzeige und Anwesenheitsdetektor.

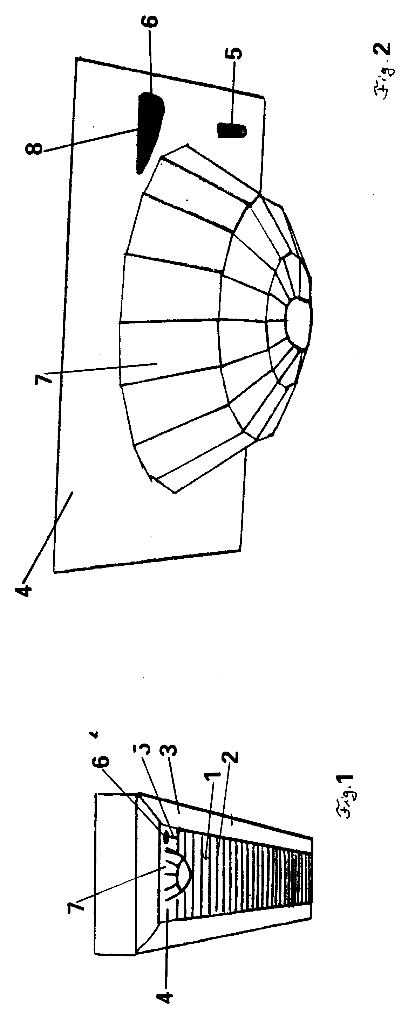

In Fig. 1 ist eine Leuchtstoffröhre 1 mit einem davor angeordneten Leuchtenraster 2 dargestellt. Leuchtstoffröhre 1 und Leuchtenraster 2 sind in einem Gehäuse 3 befestigt. An einem Ende der Leuchtstoffröhre 1 ist eine Steuereinrichtung 4 ebenfalls innerhalb des Gehäuses 3 angeordnet. Eine Versorgung mit Strom und mit externen Steuersignalen kann beispielsweise auf der Rückseite des Gehäuses erfolgen.

Die Steuereinrichtung 4 ist im Detail in Figur 2 dargestellt. Ein Sensortaster 5 steht in der dargestellten Ausführungsform in Form eines Stiftes aus der Gehäusewand der Steuereinrichtung 4 hervor. Hier ist er für einen Benutzer besonders einfach zugänglich und bedienbar. Neben dem Sensortaster 5 steht aus dem Gehäuse der Steuereinrichtung 4 eine Leuchtdiode 6 als Zustandsanzeige aus dem Gehäuse hervor. Die Leuchtdiode 6 zeigt den durch den Sensortaster 5 gewählten Betriebszustand der Steuereinrichtung 4 an. Zentral auf der Steuereinrichtung ist der polyedrisch ausgebildete Anwesenheitsdetektor 7 angeordnet. Als passiver Infrarotdetektor ausgebildet kann er eine innerhalb seines Horizontes sich aufhaltende Person detektieren und so entsprechend den eingestellten Parametern in der Steuerschaltung entsprechende Schalt- oder Dimmfunktionen bewirken.

Der Helligkeitssensor 8 ist bei der dargestellten Ausführungsform der Steuereinrichtung gemeinsam mit der Leuchtdiode 6 in einem vorspringenden Bereich der Außenwand der Steuereinrichtung angeordnet, wobei dieser Bereich aus einem transparenten Material besteht, damit das Licht zur Helligkeitsmessung zum Helligkeitssensor 8 und das Licht der Leuchtdiode 6 zum Benutzer dringen kann. Die Steuer- und Regelfunktionen der dargestellten Steuereinrichtung 4 sind im einzelnen:

Als eine erste Funktion ist die oben bereits genannte Adressierung für eine Steuerung mittels Fernbedienung vorgesehen. Der Programmiermodus, in dem Parameterwerte verstellbar sind, wird durch ein Drücken des Sensortasters 5 für mindestens 5 Sekunden aktiviert. Zur Bestätigung, daß der Programmiermodus erreicht ist, blinkt die Leuchtdiode 6. Wird im Programmiermodus nun der Sensortaster 5 einmalig betätigt, so wird der Modus zum Einstellen der Adressierung aufgerufen. Hierbei blinkt die Leuchtdiode 6 während der Betätigung und kurze Zeit nach der Betätigung des Sensortasters auf, um dem Benutzer den ausgewählten Modus zur Einstellung der Adressierung zu bestätigen. Anschließend leuchtet die Leuchtdiode 6 dauernd auf, um dem Benutzer die Empfangsbereitschaft der Steuereinrichtung 4 anzuzeigen. Wird nun in diesem Modus eine zur Steuerung dieser Leuchteinheit vorgesehene Fernbedienung dreimal betätigt, so blinkt die Leuchtdiode bei jeder Betätigung der Fernbedienung auf. Ist die Einstellung des Adreßparameters in der Steuereinrichtung durch dreimaliges Betätigen der Fernbedienung erfolgt, so erlischt die Leuchtdiode 6 und die Steuereinrichtung 4 kehrt vom Programmiermodus in den Regelbetrieb zurück.

Bei der Einstellung des Parameters für den tageslichtabhängigen Regelbetrieb wird ebenfalls nach einer Betätigung des Sensortasters für 5 Sekunden in den Programmiermodus umgeschaltet. In dem Programmiermodus wird durch zweimaliges Betätigen des Sensortasters 5, hierbei blinkt die Leuchtdiode bei jeder Betätigung des Sensortasters 5 auf, der Modus zur Einstellung des Sollwertparameters aufgerufen. In diesem Modus führt die Steuereinrichtung 4 einen Dimmprozeß aus, in dessen Verlauf die Helligkeit mehrfach zwischen maximalem Helligkeitswert und minimalem Helligkeitswert gefahren wird. Wird während des Dimmprozesses der Sensortaster einmal kurz gedrückt, so wird die momentane Beleuchtungsstärke als Sollwertparameter gesetzt. Die Leuchtdiode blinkt hierbei zur Bestätigung für den Benutzer 5 Sekunden lang schnell auf. Anschließend kehrt die Steuereinrichtung aus dem Programmiermodus wieder in den Regelmodus zurück.

Eine weitere vorteilhafte Funktion an der Steuereinrichtung, die mit dem Sensortaster und einer Zustandsanzeige versehen ist, besteht in einem einfachen Test der Reichweite des Anwesenheitsdetektors 7, gelegentlich wird dieser Test auch Walktest genannt. Der Test wird durch dreimaliges Drücken des Sensortasters 5 aktiviert, wobei die Leuchtdiode 6 bei jedem Tastendruck zur Bestätigung aufleuchtet. Während des Tests zeigt die Leuchtdiode 6 durch Aufleuchten an, ob eine Person durch den Anwesenheitsdetektor 7 registriert wird oder nicht. Ein solcher Test dient dazu, die Reichweite des Anwesenheitsdetektors 7 beispielsweise bei der Befestigung der Steuereinrichtung 4 im Raum zu berücksichtigen. Ferner kann der Walktest zum Einstellen der Empfindlichkeit des Anwesenheitsdetektor 7 verwendet werden.

Bei einer weiteren Funktion der Steuereinrichtung wird im Programmiermodus durch ein viermaliges Drücken des Sensortasters 5 der minimale Helligkeitswert eingestellt. Die Leuchtdiode 6 leuchtet nach einer kurzen Verzögerungszeit zur Bestätigung der Aktivierung dieses Modus viermal kurz auf. Wie beim Einstellen des tageslichtabhängigen Sollwerts beginnt nun die Steuereinrichtung die möglichen Helligkeitswerte durchzufahren, wobei durch ein erneutes Betätigen des Sensortasters der minimale Helligkeitswert gesetzt wird. Der Parameter für den minimalen Helligkeitswert gibt an, wieweit die Steuereinrichtung 4 sowohl im tageslichtabhängigen Regelbetrieb als auch bei einer Verwendung des Anwesenheitsdetektors 7 herunterdimmen kann. Durch ein fünfmaliges Betätigen des Sensortasters 5 im Programmiermodus wird der minimale Helligkeitswert auf einen Wert zurückgesetzt, welcher der untersten erreichbaren Dimmstellung des für die Leuchteinheit verwendeten elektronischen Vorschaltgerätes entspricht.

Im aktivierten Programmiermodus wird durch sechsmaliges Drücken des Sensortasters 5 das Abschalten der Leuchteinheit durch den Anwesenheitsdetektor 7 deaktiviert. Durch siebenmaliges Drücken des Sensortasters 5 kann die Abschaltfunktion durch den Anwesenheitsdetektor 7 wieder aktiviert werden. Bei beiden Umschaltvorgängen blinkt zur Bestätigung die Leuchtdiode 6 entsprechend häufig auf.

Die Abschaltfunktion für den tageslichtabhängigen Regelbetrieb wird durch achtmaliges oder neunmaliges Drücken des Sensortasters im Programmiermodus aktiviert bzw. deaktiviert. Im tageslichtabhängigen Regelbetrieb wird abhängig von dem zugehörigen Parameter festgesetzt, ob die Steuereinrichtung die Leuchtstoffröhre 1 auch bei ausreichendem Tageslicht eingeschaltet läßt und lediglich ihren Helligkeitswert auf den minimalen Helligkeitswert dimmt oder ob die Steuereinrichtung die Leuchtstoffröhre 1 bei ausreichendem Tageslicht ausschaltet.

Im Zusammenhang mit dem tageslichtabhängigen Regelbetrieb ist in der Steuereinrichtung ebenfalls ein Parameter zur Festlegung einer tageslichtabhängigen wiedereinschaltfunktion vorgesehen. Ist der Parameter für eine Aktivierung der tageslichtabhängigen Wiedereinschaltfunktion gesetzt, so schaltet die Steuereinrichtung bei nachlassendem Tageslicht wieder ein, wenn gleichzeitig eine Person durch den Anwesenheitsdetektor festgestellt wird. Ist der Parameter für das tageslichtabhängigen Wiedereinschalten nicht gesetzt, so bleibt die Leuchtstoffröhre bei nachlassendem Tageslicht ausgeschaltet. Aktiviert oder Deaktiviert wird dieser Modus, durch ein zehnmaliges bzw. elfmaliges Drücken des Sensortasters 5 im Programmiermodus der Steuereinrichtung, wobei zur Bestätigung die Leuchtdiode ebenso häufig aufblinkt, wie der Sensortaster 5 gedrückt wurde.

Alle Parameter und Einstellungen können durch ein zwölfmaliges Betätigen des Sensortasters 5 auf ihre Werkseinstellung zurückgesetzt werden.

### Bezugszeichenliste

- 1: Leuchtstoffröhre
- 2: Leuchtenraster
- 3: Gehäuse
- 4: Steuereinrichtung
- 5: Sensortaster
- 6: Leuchtdiode
- 7: Anwesenheitsdetektor
- 8: Helligkeitssensor

## Patentansprüche

1. Beleuchtungssystem mit mindestens einer Leuchteinheit (1), die über eine wenigstens mit einem Helligkeitssensor (8) ausgestattete Steuereinrichtung (4) anhand von Parametern steuerbar und/oder regelbar ist**, dadurch gekennzeichnet,** daß die Parameter über einen an der Steuereinrichtung (4) angeordneten Sensortaster (5) einstellbar sind und daß an der Steuereinrichtung (4) eine Zustandsanzeige (5) vorgesehen ist, die den einzustellenden Parameter anzeigt.

2. Beleuchtungseinrichtung nach Anspruch 1, **dadurch gekennzeichnet,** daß die Zustandsanzeige eine Leuchtdiode (6) enthält.

3. Beleuchtungseinrichtung nach Anspruch 2, **dadurch gekennzeichnet,** daß die Steuereinrichtung (4) eine Blinkschaltung enthält, die durch Aufblinken der Leuchtdiode (6) den zum Einstellen ausgewählten Parameter anzeigt.

4. Beleuchtungseinrichtung nach einem der Ansprüche 1 bis 3, **dadurch gekennzeichnet,** daß die Steuereinrichtung (4) durch eine kontinuierliche Betätigung des Sensortasters (5) über eine vorbestimmte Zeitspanne hinweg in einen Programmiermodus, in welchem die Parameter einstellbar sind, umschaltbar ist.

5. Beleuchtungseinrichtung nach Anspruch 4, **dadurch gekennzeichnet,** daß die Steuereinrichtung (4) eine Erkennungsschaltung enthält, die im Programmiermodus aktiviert ist und durch eine Betätigungsfolge des Sensortasters (5) den einzustellenden Parameter erkennt.

6. Beleuchtungseinrichtung nach Anspruch 4 oder 5, **dadurch gekennzeichnet,** daß die Steuereinrichtung (4) nach Ablauf einer Zeitspanne ohne Betätigung des Sensortasters (5) den Programmiermodus beendet.

7. Beleuchtungseinrichtung nach einem der Ansprüche 1 bis 6, **dadurch gekennzeichnet,** daß die Steuereinrichtung (4) durch eine Fernbedienung steuerbar ist und in der Steuereinrichtung (4) ein Adreßparameter zur Identifikation der zur Steuerung zulässigen Fernbedienung vorgesehen ist, wobei der Adreßparameter einen die Fernbedienung identifizierenden Adressencode enthält, der, wenn die Steuereinrichtung (4) sich zur Einstellung des Adreßparameters im Programmiermodus befindet, durch mehrmaliges Betätigen der Fernbedienung in der Steuereinrichtung speicherbar ist.

8. Beleuchtungseinrichtung nach einem der Ansprüche 1 bis 7, **dadurch gekennzeichnet,** daß in der Steuereinrichtung (4) ein Sollwert als Parameter für einen tageslichtabhängigen Regelbetrieb vorgesehen ist, wobei der Sollwertparameter in einem zu seiner Einstellung vorgesehenen Modus, in dem die Steuereinrichtung die zugehörige Leuchteinheit von maximaler zu minimaler Helligkeit fährt, durch eine Betätigung des Sensortasters bei der gewünschten Helligkeit einstellbar ist.

9. Beleuchtungseinrichtung nach Anspruch 8, **dadurch gekennzeichnet,** daß in der Steuereinrichtung (4) ein Parameter zur Aktivierung einer tageslichtabhängigen Abschaltfunktion vorgesehen ist.

10. Beleuchtungseinrichtung nach einem der Ansprüche 1 bis 9, **dadurch gekennzeichnet,** daß in der Steuereinrichtung (4) ein Parameter für einen minimalen Helligkeitswert vorgesehen ist, wobei dieser in einem zu seiner Einstellung vorgesehenen Modus, in dem die Steuereinrichtung (4) die zugehörige Leuchteinheit (1) von maximaler zu minimaler Helligkeit fährt, durch eine Betätigung des Sensortasters (5) einstellbar ist.

11. Beleuchtungseinrichtung nach einem der Ansprüche 1 bis 10, **dadurch gekennzeichnet,** daß die Steuereinrichtung einen Anwesenheitsdetektor (7) oder Bewegungssensor enthält und in der Steuereinrichtung (4) ein Parameter zur Aktivierung einer durch den Anwesenheitsdetektor (7) oder den Bewegungssensor ausgelösten Abschaltfunktion vorgesehen ist.

12. Beleuchtungseinrichtung nach einem der Ansprüche 1 bis 11, **dadurch gekennzeichnet,** daß in der Steuereinrichtung (4) ein Parameter zur Aktivierung einer tageslichtabhängigen Einschaltfunktion der Leuchteinheit vorgesehen ist.

13. Beleuchtungseinrichtung nach einem der Ansprüche 1 bis 12, **dadurch gekennzeichnet,** daß in der Steuereinrichtung (4) ein Parameter für ein Zurücksetzen sämtlicher Parameterwerte vorgesehen ist.

14. Beleuchtungseinrichtung nach einem der Ansprüche 1 bis 13, **dadurch gekennzeichnet,** daß der Sensortaster (5) hinter einer Öffnung in einer Gehäusewand der Steuereinrichtung (4) angeordnet ist.
